# EUROPÄISCHE PATENTSCHRIFT

(11) **EP 1 855 927 B1**
(45) Veröffentlichungstag und Bekanntmachung des Hinweises auf die Patenterteilung: **30.07.2008**
(21) Anmeldenummer: 06723319.7
(22) Anmeldetag: 09.03.2006
(51) Int. Cl.: B60T 13/74, F16D 65/14, H02K 7/116, B60T 1/06

(54) **ELEKTROMOTORISCHER BREMS-AKTUATOR**
ELECTROMOTIVE BRAKE ACTUATOR
ACTIONNEUR DE FREIN PAR ENTRAINEMENT ELECTROMOTEUR

(30) Priorität: 11.03.2005 DE 202005004108 U; 11.05.2005 DE 102005021767
(43) Veröffentlichungstag der Anmeldung: 21.11.2007
(73) Patentinhaber: Oechsler Aktiengesellschaft, 91522 Ansbach (DE); Lucas Automotive GmbH, 56070 Koblenz (DE)
(72) Erfinder: DETTENBERGER, Stefan, 91522 Ansbach (DE); WOLF, Wilhelm, 91580 Petersaurach (DE)
(74) Vertreter: Führing, Dieter
(86) Internationale Anmeldenummer: PCT/EP2006/002171
(87) Internationale Veröffentlichungsnummer: WO 2006/094804

(56) Entgegenhaltungen:
- EP-A- 0 372 219
- WO-A-02/099312
- PATENT ABSTRACTS OF JAPAN Bd. 2000, Nr. 23, 10. Februar 2001 (2001-02-10) & JP 2001 173733 A (NAMIKI PRECISION JEWEL CO LTD), 26. Juni 2001 (2001-06-26) in der Anmeldung erwähnt
- PATENT ABSTRACTS OF JAPAN Bd. 2003, Nr. 04, 2. April 2003 (2003-04-02) & JP 2002 349643 A (NAMIKI PRECISION JEWEL CO LTD), 4. Dezember 2002 (2002-12-04)

## Beschreibung

Die Erfindung betrifft einen Aktuator gemäß dem Oberbegriff des Anspruches 1.

Ein derartiger Aktuator mit einem elektromotorisch antreibbaren Getriebe zum Betätigen einer Park- oder so genannten Feststell-Bremse ist aus der EP 1 364 850 A1 mit einer Riemen-Transmission zwischen einem Motor und einem Drehmomentenwandler bekannt. Letzterer ist vorzugsweise als mehrstufiges Planetengetriebe mit am letzten Planetenträger angeordneter Abtriebswelle ausgelegt. Die Planetenträger laufen in einer Innenverzahnung des hohlzylindrischen Getriebegehäuses um. Ein solches Getriebe erbringt die für einen derartigen Aktuator anzustrebende Drehmomentenerhöhung infolge starker Drehzahl-Untersetzung, um kleinbauende hochtourige Elektromotoren mit entsprechend geringem Ausgangsdrehmoment einsetzen zu können. Das Getriebegehäuse des vorbekannten Aktuators ist gegen eine Rückstellfederkraft verdrehbar gelagert, so daß sich über die aktuelle Drehwinkelstellung das momentan übertragene Drehmoment messtechnisch erfassen läßt. Über etwaige konstruktive Gesichtspunkte zur Getriebelagerung, zumal zum Beherrschen der mit dem Drehmoment ansteigenden Materialbeanspruchung, ist jener Vorveröffentlichung nichts zu entnehmen.

Aus der JP 2 001 173 733 A ist ein einem Antriebsmotor direkt nachgeschaltetes, mehrstufig axial gestaffeltes Planetengetriebe bekannt, als dessen erstes Sonnenrad das Ritzel auf der freitragend in das Getriebe hineinragenden Motorausgangswelle fungiert. Die Planetenräder der aufeinanderfolgenden Getriebestufen rollen jeweils in der schrägverzahnten Innenmantelfläche eines über seine Länge konstanten Innendurchmesser aufweisenden, hohlzylindrischen Getriebegehäuses ab. An dem jeweiligen Planetenträger dient ein Ritzel als Sonnenrad für die Planetenräder der nächstfolgenden Getriebestufe, deren letzte ist mit einem Wellenstumpf als in der Stirnwand des Getriebegehäuses radial gelagerte und daraus herausragende Ausgangswelle ausgestattet. An dieser ist rückwärtig ein freitragend in das Gehäuse hinein ragender Stift drehfest koaxial befestigt, der in axialem Abstand vor der Motorwelle mit seinem ersten Sonnenrad endet. Auf jenem Stift ruhen frei verdrehbar die Planetenträger mit ihren Sonnenrädern. Damit diese nicht lastbedingt axial gegeneinander anlaufen, ist der Stift jeweils zwischen dem Stirnende eines Sonnenrades und dem als nächstfolgende Getriebestufe axial benachbarten Planetenträger unverrückbar und unverdrehbar mit einem Axialanschlag als Abstandshalter ausgestattet. Die Montage eines solchen Getriebes ist deshalb außerordentlich erschwert. Unter Last wird die mechanische Beanspruchung jenes zentralen, nur in der Ausgangswelle gehalterten Lager-Stiftes so kritisch, daß in der Umgebung des gegenüberliegend frei vorkragenden Stift-Stirnendes der Eingriff der Planetenräder in die Gehäuseinnenverzahnung nicht mehr gewährleistet ist. Schon deshalb ist mit einer derartigen Konstruktion der im Betrieb auftretenden Belastung mit ihrem in Längsrichtung des hohlzylindrischen Getriebegehäuses ansteigenden Drehmoment durch die nur einseitige Lagerung des zentralen Stiftes nicht Genüge getan; wenn sie auch dem Konstruktionsprinzip des Vermeidens einer überbestimmten Lagerung entspricht.

Gattungsähnliche Aktuatoren mit Riemen-Transmission zwischen Motor und Getriebe sind für eine hydraulische bzw. für eine mechanische Parkbremse aus der DE 1 97 32 168 C1 bzw. aus der DE 1 97 48 318 C1 bekannt. Als extrem stark untersetzende, selbsthemmend wirkende Getriebe sind hier Wellgetriebe oder Taumelradgetriebe vorgesehen. Die Kinetik dieser Drehmomentensteigerung infolge sehr hoher Drehzahl-Untersetzung verlangt wiederum den Einsatz überaus hoch belastbarer und deshalb kostspieliger Materialien.

Der Einsatz hochfester Sondermaterialien zum Beherrschen der im Getriebe auftretenden Kräfte bedingt allerdings Kosten, mit denen der seitens der Kraftfahrzeugindustrie ihren Zulieferern zugemutete Kostenpunkt kaum noch einhaltbar ist.

In Erkenntnis dieser Gegebenheiten liegt vorliegender Erfindung die technische Problemstellung zugrunde, einen Aktuator gattungsgemäßer Art anzugeben, der die Anforderungen der Praxis hinsichtlich zuverlässiger Funktion trotz hoher Getriebeuntersetzung, also starken Drehmomentenanstiegs, mit einer konstruktiv wenig aufwendigen aber im Betrieb hoch belastbaren Planetenträger-Lagerung erfüllt.

Diese Aufgabe ist erfindungsgemäß durch die Kombination der wesentlichen im Hauptanspruch angegebenen Merkmale gelöst. Danach wird für die zwischen den Eingangs- und Ausgangswellen koaxial gestaffelten Planetenstufen den allgemein anerkannten Konstruktionsregeln zuwider eine, sogar gleich mehrfach, überbestimmte Lagerung gewählt. Hierfür dient ein zwischen Eingangs- und Ausgangswelle durch das Getriebe koaxial hindurch sich erstreckender hier so genannter Zentrier-Stift als an seinen beiden Stirnenden radial gelagerte zentrale Lagerwelle, längs der sowohl zentrale wie auch, axial gegeneinander versetzt, periphere Lagerstellen auftreten. Dazu ist der Zentrierstift mit einem der zwischen dem ersten der Sonnenräder und dem letzten der Planetenträger etwa mittig gelegenen Planetenträger drehstarr verbunden, im übrigen aber nicht nur gegenüber den weiteren Planetenträgern mit ihren Sonnenrädern, sondern auch in seinen beiden Stirnlagerungen verdrehbar. Diese Auslegung erlaubt einen Verzicht auf den Einsatz extrem belastbarer Materialien, insbesondere können die stirnverzahnten Planetenräder und deren gehäusefesten innenverzahnten Stützringe preisgünstig aus faserverstärktem Kunststoff gespritzt sein.

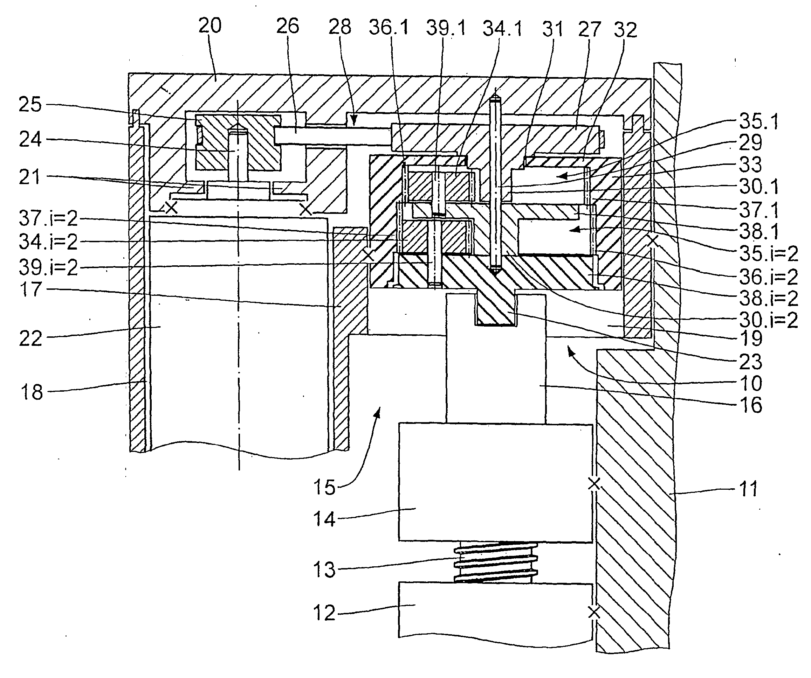

Weitere Einzelheiten, Weiterbildungen und Abwandlungen zur erfindungsgemäßen Lösung ergeben sich aus den weiteren Ansprüchen und, auch hinsichtlich weiterer Vorteile, aus nachstehender Beschreibung eines in der Zeichnung unter Beschränkung auf das Wesentliche stark abstrahiert aber im Getriebebereich angenähert maßstabsgerecht skizzierten bevorzugten Ausführungsbeispiels zur Erfindung.

Die einzige Figur der Zeichnung zeigt im Axiallängsschnitt, auf das Funktionswesentliche abstrahiert, ein Aktuator-Gehäuse zur parallelen Aufnahme eines kleinbauenden, hochtourigen elektrischen Antriebs-Motors und eines von jenem über einen drehzahluntersetzenden Riementrieb angetriebenen, mehrstufig kaskadierten Planeten-Getriebes zu drehmomentenstarker rotatorischer Betätigung eines Bewegungswandlers vor dem Parkbremsmechanismus eines Landkraftfahrzeuges.

An einem, nicht mit einem zu bremsenden Fahrzeugrad rotierenden, Teil einer Fahrzeugkarosserie 11 ist eine Feststell- oder Park-Bremse 12 befestigt. Solche drehstarren mechanischen Befestigungen sind in der Zeichnung jeweils durch das Symbol "x" veranschaulicht. Die Bremse 12 ist von einem Aktuator 15 direkt betätigbar; oder sie kann über eine Spindelstange oder dergleichen Schubgestänge 13, aus einem ebenfalls karosseriefesten Bewegungs-Wandler 14 zum Umsetzen einer Dreh- in eine Linearbewegung, betätigt werden. Das zur Bremsbetätigung erforderliche Drehmoment wird vom Aktuator 15 mittels eines Elektro-Motors 22 und eines ihm folgenden Untersetzungs-Getriebes 10, und je nach den Einbauanforderungen über eine starre, gelenkige oder biegsame Welle 16, geliefert.

Auch das Gehäuse 17 des Aktuators 15 ist verdrehfest an der Karosserie 11 gehaltert. Es besteht, im Axial-Querschnitt (also quer zur Zeichenebene) betrachtet, im Wesentlichen aus einer etwa 8-förmigen Anordnung zweier zueinander achsparallel, nämlich längs ihrer Erzeugenden, miteinander verbundener Hohlzylinder, die unterschiedliche axiale Längen und Durchmesser aufweisen können. Der eine Hohlzylinder dient als Motoraufnahme 18 (in der Zeichnung in Längsrichtung abgebrochen skizziert) und der andere als Getriebeaufnahme 19. Diese beiden Aufnahmen 18, 19 enden antriebsseitig, also von der Bremse 12 abgelegen, vorzugsweise in einer gemeinsamen Querebene offen, wo sie dann von einem kraft- oder formschlüssig darauf befestigbaren Deckel 20 verschließbar sind. Der Deckel 20 ist zur Motoraufnahme hin mit formschlüssig eingelegten oder wie skizziert mit angeformten Profilen 21 ausgestattet, die den Motor 22 in seiner taschenförmigen Aufnahme 18 verdrehfest arretieren.

Die mit dem nicht gezeichneten Rotor des Motors 22 drehstarr verbundene Motorwelle 24 ist im dargestellten Ausführungsbeispiel mit einem gezahnten Trieb 25 für einen quergerippten Riemen 26 bestückt, der eine Riemenscheibe 27 wesentlich größeren Umfangs umschlingt, um über diese Transmission 28 eine erste Untersetzung der Drehzahl des Motors 22 herbeizuführen. Die Riemenscheibe 27 trägt abtriebsseitig drehfest koaxial einen als Eingangswelle des Getriebes 10 wirkenden Wellenstumpf mit Stirnverzahnung als Ritzel 30 an seinem freien Stirnende.

Vorzugsweise ist die Eingangswelle samt ihrem Ritzel 30, gegebenenfalls samt der Riemenscheibe 27, einstückig aus Sintermetall gefertigt und von Kunststoff umspritzt, zumal wenn abtriebsseitig eingreifende Planetenräder 34, sowie gegebenenfalls ein antriebsseitig eingreifender Zahnriemen 26, ebenfalls aus Kunststoff bestehen.

Die Eingangswelle, also auch ihr Ritzel 30, rotiert um einen Zentrier-Stift 29, der mit seinem benachbarten Stirnende in einer sacklochförmigen Öffnung im Gehäuse 17 oder in dessen Deckel 20 radial geführt ist. Der Stift 29 dient auch für die Sonnenräder an den Planetenträgern 38 des mehrstufig kaskadierten Planeten-Getriebes 10 als zentrale Lagerwelle, die sich einstückig koaxial von ihrer Radiallagerung vor der Eingangswelle bis zu ihrer Radiallagerung an der Ausgangswelle 23 durch das ganze Getriebe 10 hindurch erstreckt.

Die von dem Zentrierstift 29 durchgriffene Eingangswelle ist zusätzlich im antriebsseitigen Stirnende eines topfförmigen Getriebegehäuses 33 radial gelagert. Dafür greift der um den Stift 29 rotierende Wellenabschnitt vor dem Ritzel 30 durch eine als Lagerring wirkende zentrale Öffnung 31 im Boden 32 des Getriebegehäuses 33 hindurch in dieses hinein. Zusätzlich zu dieser Radiallagerung in der Öffnung 31 erfährt die Eingangswelle am gegenüberliegenden Ende jenes Wellenabschnittes dadurch eine radiale Lagerung im Getriebegehäuse 33, daß ihr Ritzel 30 sich als Sonnenrad über Planetenräder 34 in der ringförmigen Innenmantelfläche des Gehäuses 33 radial abstützt. Die antriebsseitig auf die Eingangswelle eingebrachten radialen Belastungen sind so infolge überbestimmter Lagerung längs des Stiftes 29 auf mehrere, axial gegeneinander versetzte radiale Stützstellen verteilt.

Das Getriebegehäuse 33 ist, zu seiner konstruktiven drehstarren Festlegung im Aktuator 15, in das Aktuator-Gehäuse 17 axial eingeführt und darin bei Erreichen der axialen Sollstellung durch Einklemmen kraftschlüssig oder vorzugsweise durch Einschnappen von angeformten Biegefedern mit Rasthaken formschlüssig drehstarr festgelegt, wie in der Zeichnung wieder durch die Symbole "x" veranschaulicht.

Innerhalb des Getriebegehäuses 33 dient das an der Eingangswelle ausgebildete, also erste, Ritzel 30.1 unmittelbar als das Sonnenrad für wenigstens ein, im Interesse ruhigen Rundlaufes vorzugsweise für zwei oder drei, ebenfalls stirnverzahnte Planetenräder 34.1 (von denen in der Schnittdarstellung der Zeichnung nur eines erfaßt ist) einer ersten Planetengetriebestufe 35.1. In ihr kämmt das jeweilige Planetenrad 34.1 mit der Hohlrad-Innenverzahnung 36.1 eines gehäusefesten Stützringes 37.1, mit dem das Getriebegehäuse 33 wie skizziert ausgebildet (oder aber separat drehstarr bestückt) ist.

Wenigstens die Stützringe 37, vorzugsweise gleich das komplette Getriebegehäuse 33 sind Kunststoffspritzgussteile. Jedenfalls in der skizzierten Auslegung als axial durchgehendes Getriebegehäuse 33 ist die Folge der Stützringe 37 durch eingegossene Fasern verstärkt, um die in axialer Richtung über die Planetenstufen 35 ansteigenden Drehmomente zuverlässiger aufnehmen und ableiten zu können. Jedenfalls in den ersten Planetenstufen 35 sind auch die Planetenräder 34 im Kunststoffspritzguß erstellt, wiederum mit mechanischer Verstärkung durch eingelagerte Fasern.

Im Getriebegehäuse 33 läuft pro Getriebestufe 35 mit ihren Planetenrädern 34, axial dagegen längs des durch das Getriebe 10 hindurch sich erstreckenden Lager- oder Zentrierstif tes 29 versetzt, ein Planetenträger 38 um. Der ist auf seiner antreibenden oder Sonnenrad-Seite mit einem achsparallelen Zapfen 39 für fliegende Lagerung des jeweiligen Planetenrades 34 ausgestattet. Bei diesen, auch als Stege bezeichneten, Planetenträgern 38, die mit der Lagerung der Planetenräder 34 mechanisch hoch beansprucht sind, handelt es sich vorzugsweise um Formkörper aus Sintermetall, die nicht von Kunststoff umspritzt sein müssen, da sie nicht mit Kunststoffprofilen in Verzahnungseingriff stehen.

Hinter einer Getriebestufe 35.1 dient ihr Planetenträger 38.1 zugleich, mit einem an ihm vorgesehenen Ritzel 30.2, als Abtrieb zu einer nachfolgenden Planetengetriebestufe 35.2 mit ihren-zwischen diesem Sonnenrad (Ritzel 30.2) und ihrem innenverzahnten Stützring 37.2 umlaufenden, stirnverzahnten Planetenrädern 34.2. Die Anzahl der Planetenräder 34 in der Folgestufe ist wenigstens gleich derjenigen in der vorangegangenen Stufe 35, vorzugsweise wegen des ansteigenden Drehmomentes höher und deshalb jedenfalls nicht niedriger als in der vorangehenden Stufe 35; in der Zeichnung ist wieder nur eines von hier vier Planetenrädern 34.2 dargestellt. Dem ansteigenden Drehmoment entsprechend rollen die Planetenräder 34 aufeinanderfolgender Getriebestufen in Stützringen 37 zunehmender Durchmesser ab. Die Planetenräder 34 drehen mit ihren Lager-Zapfen 39.2 den nächstfolgenden Planetenträger 38.2 - und so fort, bis zum letzten im Getriebegehäuse 33 angeordneten Planetenträger 38.i (gezeichnet ist i = 2). Jedenfalls die Planetenräder 34.i auf dem letzten Träger 38.i bestehen wie letzterer, wegen des höchsten hier erreichten Drehmomentes, aus blankem (oder aus umspritztem) Sintermetall.

Diese letzte (35.i) der so über ihre Träger-Ritzel 30 kaskadierten Getriebestufen 35 ist statt mit einem Ritzel unmittelbar mit der zentralen Ausgangswelle 23 zur Drehmomentenabgabe ausgestattet. Dafür ist die Ausgangswelle 23, den geschilderten Lagerungsmaßnahmen an der Eingangswelle vergleichbar, axial versetzt wieder gleich mehrfach überbestimmt radial gelagert; nämlich einerseits, mittels des letzten Planeten-Trägers 38.i, im abtriebsseitigen, offenen Stirnende des topfförmigen Getriebegehäuses 33 (wie in der Zeichnungsskizze durch die abgestufte Profilierung als Lagerring veranschaulicht); außerdem zum Innern des Gehäuses 33 hin axial versetzt über diesen letzten Träger 38.i durch die radiale Stützwirkung seiner Planetenräder 34.i in ihrem Innenring 36.i; und schließlich über das diesseitige Ende des Zentrierstiftes 29, der als radiale Gleitlagerung verdrehbar in den letzten Planetenträger 38.i eingreift oder diesen sogar bis in die sich anschließende Ausgangswelle 23 durchgreift. Andererseits ist der Stift 29 drehstarr in einem der davor, etwa mittig zwischen Eingangs- und Ausgangswelle, gelegenen Planetenträger 38 gehaltert, etwa eingepresst, so daß er, über dessen Planetenräder 34 axial davor, in deren gehäusefesten Stützring 37 abermals radial gelagert ist.

Für die Getriebemontage wird einerseits die Eingangswelle mit ihrem Ritzel 30.1 von außen durch die Öffnung 31 im Gehäuseboden 32 eingeführt und andererseits vom Innern des gegenüberliegend offenen Getriebe-Gehäuses 33 her der Stift 29 mit dem drehfest getragenen Planetenträger 38 und gegebenenfalls mit davor verdrehbar getragenen weiteren Planetenträgern durch die zentrale Bohrung in der Eingangswelle gesteckt sowie gegenüberliegend, am freien Stirnende, mit gegebenenfalls weiteren Planetenstufen 35 bestückt. Infolge der abtriebsseitig stufenweisen Durchmesservergrößerung seiner gehäusefesten Stützringe 37 kann das Planeten-Getriebe 10 mit seinen schon radbestückten Planetenträgern 38 problemlos von der offenen Topfseite her (in der Zeichnung von unten nach oben) in das abgestuft sich verjüngende Getriebegehäuse 33 hinein montiert und auf Funktion geprüft werden, ehe das so komplett bestückte Getriebegehäuse 33 seinerseits in seine Aufnahme 19 des Aktuator-Gehäuses 17 eingeführt wird. Abschließend wird nur noch der Deckel 20 mit seiner darin vorgesehenen Öffnung als radialer Lagerung auf das die Eingangswelle durchragende freie Stirnende des zentrierenden Lagerstiftes 29 gestülpt.

Dem getrieblichen Anschluß an den in seiner Aufnahme 18 ruhenden Motor 22 kann unter dem Deckel 20 ein Rädersatz oder der skizzierte Riementrieb 28 dienen.

Der Aktuator 15 zum elektromotorischen Betätigen der Park- oder Feststellbremse 12, insbesondere in Personenkraftwagen, weist somit, zusammenfassend festgestellt, ein axial mehrstufig kaskadiertes Planetenradgetriebe 10 zur Drehzahluntersetzung unter entsprechendem Anstieg des ablieferbaren Drehmomentes auf. Dabei ist gemäß einer axialen Folge von innenverzahnten gehäusefesten Stützringen 37 jeweils ein Planetenträger 38 mit einem Ritzel 30 versehen, das seinerseits als Sonnenrad für die Planetenräder 34 auf dem Planetenträger 38 der nächstfolgenden Getriebestufe 35 ausgelegt ist, während der Planetenträger 38.i der letzten Getriebestufe 35.i mit seinem zentralen Wellenstupf nicht mehr als Sonnenrad sondern als Ausgangswelle 23 zur Drehmomentenabgabe dient. Durch die Eingangswelle und bis zur Ausgangswelle 23 koaxial durch das Getriebe 10 hindurch erstreckt sich erfindungsgemäß ein an seinen beiden Stirnenden radial gelagerter Zentrierstift 29, der seinerseits einer mehrfach überbestimmten radialen Lagerung der Eingangs- und Ausgangswellen 23 sowie der zwischen ihnen gelegenen, axial gegeneinander versetzen Planetenträger 38 bzw. Sonnenräder der einzelnen Getriebestufen 35 dient; wobei der Zentrierstift 29 zu seiner zusätzlichen radialen Lagerung in seinem Mittenbereich drehfest mit einem der Planetenträger 38 verbunden ist und obendrein das Getriebegehäuse 33 an seinen beiden Stirnenden jeweils als Lagerring für die Eingangswelle mit dem ersten der auch auf dem Zentrierstift 29 gelagerten Sonnenräder bzw. für den letzten an der Ausgangswelle 23 auch den Zentrierstift 29 lagernden Planetenträger 38 ausgebildet oder ausgestattet ist.

## Patentansprüche

1. Mit einem mehrstufigen Planeten-Getriebe (10) ausgestatteter, vor seinem letzten Planetenträger (38.i) eine Ausgangswelle (23) aufweisender, elektromotorischer Brems-Aktuator (15), **dadurch gekennzeichnet, daß** er ein Gehäuse (17) mit einer radialen Lagerung für ein Stirnende eines durch das Getriebe (10) bis in die Ausgangswelle (23) sich erstreckenden Zentrierstiftes (29) aufweist, auf dem axial gegeneinander versetzte Planetenträger (38) mehrer koaxial kaskadierter Planetengetriebestufen (35) radial gelagert sind, deren Planetenträger (38) jeweils mit einem Ritzel (30) als dem Sonnenrad für die in ihrem gehäusefesten Stützring (37) abrollenden Planetenräder (34) der nächstfolgenden der Planetengetriebestufen (35) ausgestattet sind, wobei der Zentrierstift (29) in einem der Planetenträger (38) drehstarr angeordnet ist, der etwa mittig zwischen dem ersten der Sonnenräder und dem letzten der Planetenträger (38) liegt.

2. Aktuator nach dem vorangehenden Anspruch, **dadurch gekennzeichnet, daß** ein mit den Stützringen (37) ausgebildetes oder ausgestattetes Getriebegehäuse (33) an seinen beiden Stirnenden jeweils als Lagerring für das erste der auch auf dem Zentrierstift (29) gelagerten Sonnenräder bzw. für den letzten auch den Zentrierstift (29) lagernden Planetenträger (38) ausgebildet oder ausgestattet ist.

3. Aktuator nach einem der vorangehenden Ansprüche, **dadurch gekennzeichnet, daß** in der ersten Planetengetriebestufe (35.1) mindestens zwei und in der jeweils nächstfolgenden Planetengetriebestufe (35), innerhalb von Stützringen (37) jeweils vergrößerten Durchmessers, mindestens ebenso viele Planetenräder (34) wie in der vorangehenden Stufe (35) auf ihren auf dem Zentrierstift (29) radial gelagerten Planetenträgern (38) angeordnet sind.

4. Aktuator nach einem der vorangehenden Ansprüche, **dadurch gekennzeichnet, daß** das am Zentrierstift (29) radial gelagerte Sonnenrad der Eingangswelle außerhalb des Getriebegehäuses (33) mit der Riemenscheibe (27) einer Transmission (28) vom Motor (22) ausgestattet ist.

5. Aktuator nach dem vorangehenden Anspruch, **dadurch gekennzeichnet, daß** die stirnseitig mit dem ersten Sonnenrad ausgestattete, auf dem Zentrierstift (29) radial gelagerte Eingangswelle eine als weitere radiale Lagerung für die Eingangswelle dienende Boden-Öffnung (31) im topfförmigen Getriebegehäuse (33) durchgreift.

6. Aktuator nach einem der vorangehenden Ansprüche, **dadurch gekennzeichnet, daß** ein den Zentrierstift (29) stirnseitig radial lagernder Gehäuse-Deckel (20) auch mit Profilen (21) zum Haltern des Motors (22) in einer Motoraufnahme (18) ausgestattet ist.

7. Aktuator nach einem der vorangehenden Ansprüche, **dadurch gekennzeichnet, daß** die innenverzahnten Stützringe (37) für die Planetenräder (34) der axial aufeinander folgenden Getriebestufen (35) in einem Getriebegehäuse (33) aus faserverstärktem Kunststoff ausgebildet sind.

8. Aktuator nach einem der vorangehenden Ansprüche, **dadurch gekennzeichnet, daß** die Planetenräder (34.1) zumindest der ersten Planetenstufe (35.1) aus faserverstärktem Kunststoff gefertigt sind.

9. Aktuator nach einem der vorangehenden Ansprüche, **dadurch gekennzeichnet, daß** die Planetenträger (38) und außerdem die Planetenräder (34.i) zumindest der letzten Planetenstufe (35.i) aus Sintermetall erstellt sind.

10. Aktuator nach einem der vorangehenden Ansprüche, **dadurch gekennzeichnet, daß** das erste Sonnenrad aus Sintermetall gefertigt und mit Kunststoff umspritzt ist.

## Claims

1. Electromotive brake actuator (15) which is equipped with a multistage planetary gear mechanism (10) and has an output shaft (23) before its last planet carrier (38.i), **characterized in that** it has a housing (17) with a radial bearing for a front end of a centring pin (29) which extends through the gear mechanism (10) into the output shaft (23) and on which planet carriers (38) which are offset axially with respect to one another, of a plurality of coaxially cascaded planetary gear mechanism stages (35) are radially mounted, the planet carriers (38) of which are each equipped with a pinion (30) as the sunwheel for the planet wheels (34), rolling in their support ring (37) fixed to the housing, of the next stage of the planetary gear mechanism stages (35), the centring pin (29) being arranged in a rotationally fixed fashion in one of the planet carriers (38) which is located approximately centrally between the first of the sunwheels and the last of the planet carriers (38).

2. Actuator according to the preceding claim, **characterized in that** a gear mechanism housing (33) which is embodied or equipped with the support rings (37) is embodied or equipped at its two front ends in each case as a bearing ring for the first of the sunwheels which are also mounted on the centring pin (29), or for the last planet carrier (38) which also supports the centring pin (29).

3. Actuator according to one of the preceding claims, **characterized in that,** in the first planetary gear mechanism stage (35.1), at least two planet wheels (34) are arranged, and in the respective next planetary gear mechanism stage (35) at least as many planet wheels (34) as in the preceding stage (35) are arranged on their planet carriers (38) which are mounted radially on the centring pin (29), said planet wheels (34) being mounted within support rings (37) which each have an enlarged diameter.

4. Actuator according to one of the preceding claims, **characterized in that** the sunwheel, mounted radially on the centring pin (29), of the input shaft is equipped, outside the gear mechanism housing (33), with the pulley (27) of a transmission (28) of the motor (22).

5. Actuator according to the preceding claim, **characterized in that** the input shaft which is equipped at the front end with the first sunwheel and is mounted radially on the centring pin (29) engages through a bottom opening (31) serving as a further radial bearing for the input shaft in the pot-shaped gear mechanism housing (33).

6. Actuator according to one of the preceding claims, **characterized in that** a housing cover (20) which supports the centring pin (29) radially at the front end is also equipped with profiles (21) for securing the motor (22) in a motor receptacle (18).

7. Actuator according to one of the preceding claims, **characterized in that** the internally toothed supporting rings (37) for the planet wheels (34) of the gear mechanism stages (35) which follow one another axially are embodied in a gear mechanism housing (33) made of fibre-reinforced plastic.

8. Actuator according to one of the preceding claims, **characterized in that** the planet wheels (34.1) at least of the first planet stage (35.1) are fabricated from fibre-reinforced plastic.

9. Actuator according to one of the preceding claims, **characterized in that** the planet carriers (38) and also the planet wheels (34.i) of at least the last planet stage (35.i) are produced from sintered metal.

10. Actuator according to one of the preceding claims, **characterized in that** the first sunwheel is fabricated from sintered metal and is encapsulated by injection moulding with plastic.

## Revendications

1. Actionneur de frein (15) à moteur électrique, doté d'une transmission (10) à planétaires à plusieurs étages et présentant un arbre de sortie (23)avant son dernier porte-planétaire (38.i),
**caractérisé en ce que**
il présente un boîtier (17) doté d'un palier radial pour l'extrémité frontale d'une tige de centrage (29) qui traverse la transmission (10) jusqu'à pénétrer dans l'arbre de sortie (23) et sur laquelle des porte-planétaire (38) décalés axialement les uns des autres de plusieurs étages (35) de transmission à planétaires sont montés radialement en cascade coaxiale, les porte-planétaire (38) étant tous équipés d'un pignon (30) qui sert de roue solaire aux roues planétaires (34) des étages suivants (35) de la transmission à planétaires qui roulent dans leur bague de soutien (37) solidaire du boîtier, la tige de centrage (29) étant disposée à rotation solidaire dans le porte-planétaire (38) situé sensiblement au milieu entre la première des roues solaires et la dernière des porte-planétaire (38).

2. Actionneur selon la revendication précédente, **caractérisé en ce qu'**un boîtier de transmission (33) configuré avec des bagues de soutien (37) ou équipé de ces dernières est configuré sur chacune de ces deux extrémités frontales comme bague de palier pour la première des roues solaires montée également sur la tige de centrage (29) et pour le dernier porte-planétaire (38) qui monte également la tige de centrage (29) ou en est équipé.

3. Actionneur selon l'une des revendications précédentes, **caractérisé en ce que** dans le premier étage (35.1) de la transmission à planétaires, au moins deux roues planétaires (34) sont disposées à l'intérieur de bagues de soutien (37) de diamètre chaque fois plus grand sur leur porte-planétaire (38) monté radialement sur la tige de centrage (29) et **en ce que** dans chaque étage (35) suivant de la transmission à planétaires, des roues planétaires (34) en nombre au moins égal à celui de l'étage précédent (35) sont disposées à l'intérieur de bagues de soutien (37) de diamètre chaque fois plus grand sur leur porte-planétaire (38) monté radialement sur la tige de centrage (29).

4. Actionneur selon l'une des revendications précédentes, **caractérisé en ce que** la roue solaire de l'arbre d'entrée montée radialement sur la tige de centrage (29) est dotée à l'extérieur du boîtier de transmission (33) de la poulie de courroie (27) de la transmission (28) du moteur (22).

5. Actionneur selon l'une des revendications précédentes, **caractérisé en ce que** l'arbre d'entrée doté frontalement de la première roue planétaire et monté radialement sur la tige de centrage (29) traverse une ouverture de fond (31) qui sert d'autre palier radial pour l'arbre d'entrée et ménagée dans le boîtier de transmission (33) en forme de chapeau.

6. Actionneur selon l'une des revendications précédentes, **caractérisé en ce qu'**un couvercle de boîtier (20) qui monte radialement la tige de centrage (29) sur son côté frontal est également doté de profilés (21) qui maintiennent le moteur (22) dans un logement (18) du moteur.

7. Actionneur selon l'une des revendications précédentes, **caractérisé en ce que** les bagues de soutien (37) à denture intérieure des roues planétaires (34) des étages de transmission (35) qui se suivent axialement sont réalisées dans un boîtier de transmission (33) réalisé en matière synthétique renforcée de fibres.

8. Actionneur selon l'une des revendications précédentes, **caractérisé en ce que** les roues planétaires (34.1) d'au moins le premier étage planétaire (35.1) sont réalisées en matière synthétique renforcée de fibres.

9. Actionneur selon l'une des revendications précédentes, **caractérisé en ce que** les porte-planétaire (38) et en outre les roues planétaires (34.i) d'au moins le dernier étage planétaire (35.i) sont réalisées en métal fritté.

10. Actionneur selon l'une des revendications précédentes, **caractérisé en ce que** la première roue solaire est réalisée en métal fritté et est englobée de matière synthétique.
